# FASCICULE DE BREVET EUROPEEN

(11) **EP 2 401 706 B1**
(45) Date de publication et mention de la délivrance du brevet: **22.04.2015**
(21) Numéro de dépôt: 10711430.8
(22) Date de dépôt: 20.02.2010
(51) Int. Cl.: G06K 19/07, G06K 19/073

(54) **DISPOSITIF PORTABLE, NOTAMMENT DU TYPE CLÉ USB, POURVU DE PLUSIEURS INTERFACES DE COMMUNICATION SANS CONTACT SÉLECTIONNABLES**
TRAGBARE VORRICHTUNG, INSBESONDERE USB-FLASH-LAUFWERK, DIE MIT MEHREREN WÄHLBAREN KONTAKTLOSEN KOMMUNIKATIONSSCHNITTSTELLEN VERSEHEN IST
PORTABLE DEVICE, IN PARTICULAR A USB FLASH DRIVE, PROVIDED WITH SEVERAL SELECTABLE CONTACTLESS COMMUNICATION INTERFACES

(30) Priorité: 24.02.2009 FR 0900847
(43) Date de publication de la demande: 04.01.2012
(73) Titulaire: Neowave S.a.S., 13120 Gardanne (FR)
(72) Inventeur: BOUCHY, Frédéric, F-13290 Les Milles (FR); BION, Alain, F-13380 Plan-de-Cuques (FR); BERNARD, Bruno, F-13600 La Ciotat (FR); MAUNIER, Marc, F-13013 Marseille (FR)
(74) Mandataire: Scheer, Luc
(86) Numéro de dépôt international: PCT/FR2010/000143
(87) Numéro de publication internationale: WO 2010/097522

(56) Documents cités:
- WO-A-2007/003978
- WO-A-2007/073966
- DE-A1-102005 061 249
- US-A1- 2006 208 066

## Description

L'invention concerne de façon générale un perfectionnement apporté à un objet électronique portable apte à communiquer sans contact avec un lecteur sans contact

L'invention sera plus particulièrement décrite dans son application à une clé de type USB, mais uniquement à titre d'exemple non limitatif, étant entendu que l'invention s'applique à d'autres objects portables communicants dotés d'un étage de communication sans fil, notamment par voie radiofréquence.

On connaît déjà des objets portables communicants de petit format, dotés d'une part d'une interface de communication à contact de type connecteur USB (pour « Universal Serial Bus » en terminologie anglosaxonne), et dotés d'autre part d'une interface de communication sans contact avec un lecteur sans contact. La communication sans contact avec le lecteur sans contact se fait à l'aide d'une liaison radio, qui met en oeuvre une antenne connectée aux bornes d'un étage électronique de transmission mettant en forme le signal à émettre ou le signal reçu par l'antenne.

L'étage de communication sans fil comporte souvent un microcircuit de carte à puce, compte tenu de la large diffusion de ce genre de composant, utilisé notamment pour la fabrication de cartes à puce pour des applications de type paiement de titres de transport ou autre.

Le document DE 10 2005 249 A1 décrit un dispositif de test pour la transmission sans fil de l'état d'un émetteur, capable de relier une ou deux antennes aux bornes d'une seule puce de transpondeur.

Le document WO 2007/003978 A1 décrit un dispositif et procédé d'activation d'antenne partagée dans un environnement de communication fondée sur la technologie RFID.

Compte tenu de la multiplication des applications susceptibles d'utiliser la technologie des cartes à puce à fonctionnement sans contact, qui souvent sont lancées par des opérateurs distincts qui exigent que leur application ne partage pas la même puce électronique que celle d'une autre application à carte à puce sans contact, on est conduit à installer plusieurs circuits de carte à puce sans contact sur un même objet portable.

Or compte tenu de la place prise par l'antenne, il est difficile et coûteux de faire cohabiter plusieurs antennes sur un même objet portable de petite taille, notamment de type clé USB. Il se pose donc un problème consistant à devoir partager un même étage de transmission sans fil, et notamment une même et unique antenne, entre deux ou plusieurs circuits de type microcircuit de carte à puce sans contact. A titre d'exemple concret, ce problème se pose dans le cas de la conception d'une clé USB faisant coexister sur un même support une première puce utilisée pour une application de type transport (utilisant par exemple un premier protocole de communication de type Innovatron avec un lecteur sans contact), avec une seconde puce utilisée pour une application de type porte-monnaie électronique (utilisant par exemple un second protocole de communication de type ISO/IEC 14443 Type B).

Lorsqu'un même étage de transmission est connecté à plusieurs puces microélectroniques, un problème qui se pose alors à l'utilisateur du dispositif est de savoir quelle puce est connectée à un instant donné à l'antenne. Et si la puce connectée à l'instant t à l'antenne n'est pas celle qui est nécessaire pour exécuter l'application de carte sans contact envisagée, il faut trouver un moyen simple de connecter l'antenne avec la carte à puce qui est nécessaire pour réaliser la prochaine transaction sans contact envisagée.

Un autre problème technique posé consiste à connecter les ports de communication de plusieurs cartes à puce sans contact, sélectivement et successivement à une antenne unique donnée aménagée sur le dispositif.

### Buts de l'invention

Un but de l'invention est par conséquent de remédier aux problèmes posés et de proposer un dispositif portable communiquant capable de commuter une antenne unique successivement sur au moins deux circuits distincts de carte à puce.

Un autre but de l'invention est de proposer un objet portable communiquant, notamment une clé USB pourvue de plusieurs composants de carte à puce susceptible de partager une antenne unique, l'utilisateur pouvant à chaque instant choisir la puce à mettre en service pour une transaction donnée.

Un autre but de invention est de proposer un objet portable communiquant pourvu de plusieurs composants de carte à puce et d'une antenne qui peut être couplée sélectivement à l'une des cartes à puce, dans lequel des moyens existent pour protéger l'utilisateur contre toute réalisation de transactions frauduleuses entre l'une des cartes à puce et un lecteur sans contact.

### Résumé de l'invention

L'invention a donc pour objet un dispositif électronique portable et communiquant, comportant un boîtier abritant une carte de circuit imprimé à laquelle sont connectées au moins deux cartes à puce, chaque carte à puce étant pourvue d'une interface de communication sans contact, ledit dispositif comportant en outre une antenne destinée à être connectée à l'interface de communication sans contact de chaque carte à puce, de façon à assurer la communication sans contact entre ladite carte à puce et un lecteur de carte à puce externe, caractérisé en ce qu'il comporte en outre un moyen de commutation connecté entre les bornes des interfaces de communication sans contact desdites cartes à puce et les bornes de ladite antenne, ce moyen de commutation étant apte à connecter sélectivement l'antenne du dispositif avec une carte à puce sans contact donnée, par actionnement dudit moyen de commutation.

Avantageusement, ledit moyen de commutation est un interrupteur à au moins deux positions stables, chaque position de l'interrupteur correspondant à la connexion d'une carte à puce donnée avec ladite antenne.

De préférence, l'interrupteur comporte en outre un point milieu connecté à aucune carte à puce, de façon à empêcher toute communication entre l'une des cartes à puce et ladite antenne, lorsque l'interrupteur est positionné sur le point milieu.

Dans une variante de réalisation du dispositif, il comporte une antenne unique connectée audit moyen de commutation, et une pluralité de cartes à puce dont les interfaces de communication sans contact peuvent sélectivement être connectées à ladite antenne par intermédiaire dudit moyen de commutation.

Dans un mode de réalisation avantageux, le boîtier du dispositif est au format d'une clé USB et comporte une interface de communication de type USB pour connecter le dispositif à un système hôte également pourvu d'une connectique de type USB.

Le dispositif comporte alors un microcontrôleur pour gérer la communication entre lesdites cartes à puce et l'interface USB.

Mais il est également possible qu'au moins l'une des cartes à puce comporte elle-même une interface de type USB, de façon à permettre une liaison entre ladite carte à puce et un connecteur USB externe, sans qu'un microcontrôleur ne soit nécessaire.

En variante, au moins l'une des cartes à puce comporte une interface de type USB, et au moins une autre carte à puce comporte une interface de type ISO 7816, cette dernière étant connectée à un convertisseur de format ISO 7816 vers USB. Dans ce cas, chaque carte à puce est connectée à un concentrateur USB soit directement via l'interface USB de la carte à puce, soit à travers un convertisseur de protocole de communication ISO 7816 vers le protocole de communication USB.

D'autres caractéristiques et avantages de l'invention apparaîtront à la lecture de la description détaillée des dessins annexés dans lesquels :
- la figure 1 représente un schéma électrique de principe du dispositif communiquant selon l'invention, dans lequel le dispositif comporte une seule antenne et deux cartes à puce sans contact, et un moyen de couplage sélectif entre l'une des cartes à puce et l'antenne ;
- la figure 2 représente un schéma électrique de principe d'un autre mode de réalisation du dispositif selon l'invention, dans lequel le moyen de couplage est réalisé de manière différente que dans la figure 1 ;
- la figure 3 représente de façon schématique le dispositif de la figure 1, dans lequel les cartes à puce sont connectées en outre à un bus de type USB, pour assurer un fonctionnement à contact ;
- la figure 4 représente de façon schématique le dispositif de la figure 1, dans lequel l'une des cartes à puce sans contact possède également une interface à contact au format USB ;
- la figure 5 représente de façon schématique le dispositif de la figure 1, dans lequel chaque carte à puce sans contact possède en outre une interface à contact au format USB, les différentes interfaces USB étant couplées à un bus USB au moyen d'un concentrateur USB (encore appelé « HUB USB » en terminologie anglosaxonne) ;
- la figure 6 représente de façon schématique le dispositif de la figure 1, dans lequel l'une des cartes à puce sans contact possède en outre une interface à contact au format USB, alors que l'autre carte à puce possède une interface de communication à contact au format ISO-7816.

### Description détaillée de l'invention

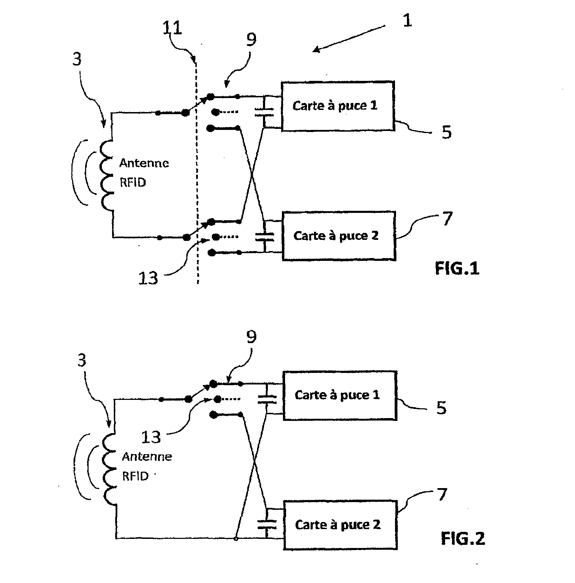

On se réfère à la figure 1. Dans cette figure, on a représenté le schéma électrique d'un premier mode de réalisation du dispositif communiquant 1 selon l'invention, dans lequel ce dispositif comporte une antenne 3 et deux cartes à puce sans contact 5,7. Le dispositif 1 comporte un boîtier (non représenté) abritant une carte de circuit imprimé à laquelle sont connectées deux cartes à puce 5,7 comme représenté dans la figure, mais en théorie rien ne s'oppose à ce qu'il y en ait plus de deux cartes à puce. Chaque carte à puce 5,7 est pourvue d'une interface de communication sans contact. L'antenne 3 est destinée à être connectée à l'interface de communication sans contact des deux (ou plus) cartes à puce, de façon à assurer la communication sans contact entre lesdites cartes à puce et un lecteur de carte à puce externe (non représenté).

Selon l'invention, le dispositif 1 comporte en outre un moyen de commutation 9 connecté entre les bornes des interfaces de communication sans contact desdites cartes à puce 5,7 et les bornes de l'antenne, ce moyen de commutation ou interrupteur 9 étant apte à connecter sélectivement l'antenne 3 du dispositif avec une carte à puce sans contact 5,7 donnée, par actionnement dudit moyen de commutation 9, comme représenté par le trait interrompu 11.

En effet, l'interrupteur 9 est connecté entre l'antenne et les interfaces de communication sans fil des cartes à puce, de manière qu'une action sur l'interrupteur ferme alternativement le circuit électrique formé entre l'antenne et le port de communication sans fil de l'une des cartes à puce, tout en ouvrant le circuit circuit électrique formé par ladite antenne et l'autre carte à puce.

Comme représenté, ledit moyen de commutation 9 est de préférence un interrupteur à au moins deux positions, chaque position de l'interrupteur correspondant à la connexion d'une carte à puce donnée avec l'antenne.

Il peut être judicieux de faire en sorte que ledit interrupteur 9 comporte en outre un point milieu 13 connecté à aucune carte à puce, de façon à empêcher toute communication entre l'une des cartes à puce et ladite antenne, lorsque l'interrupteur est positionné sur le point milieu. Ceci permet notamment de protéger l'utilisateur du dispositif 1 contre des transactions non autorisées, en empêchant toute lecture frauduleuse des cartes à puce à l'insu du titulaire.

Dans la figure 2, on a représenté une variante du dispositif de la figure 1, dans laquelle l'interrupteur 9 à point milieu a été simplifié et est connecté uniquement à une seule borne de l'interface de communication sans fil de chaque carte à puce, mais l'effet technique obtenu est le même.

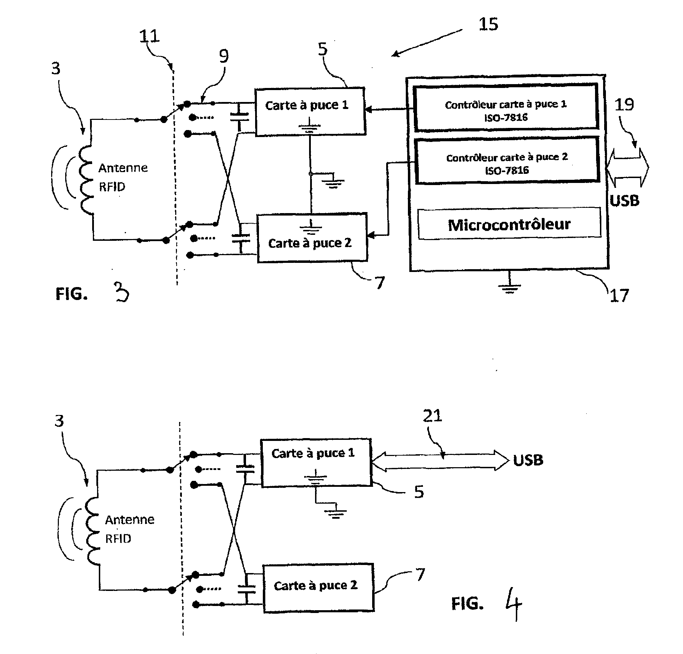

Il est à noter que les cartes à puce 5,7 ne sont pas obligatoirement des cartes à puce fonctionnant uniquement en mode sans contact. Elles peuvent très bien comporter également une interface de communication à contact classique compatible avec la norme ISO 7816, comme représenté en figure 3. En utilisant derrière l'interface à contact 15, un microcontrôleur 17 adéquat, il est possible d'attaquer un bus de données 19 au format USB, qui est très répandu pour effectuer la liaison filaire avec tous types de dispositifs ou systèmes numériques, tels que par exemple un lecteur de carte à puce à fonctionnement à contact.

Dans ce cas, le boîtier du dispositif 1 est avantageusement au format d'une clé USB et il comporte une interface de communication de type USB pour connecter le dispositif 1 à un système hôte.

Comme schématisé dans la figure 4, il est possible qu'au moins l'une des cartes à puce comporte elle-même une interface (non représentée car intégrée à la carte à puce), non pas de type type ISO 7816, mais de type USB, ce qui permet d'établir une liaison directe 21 entre ladite carte à puce et un connecteur USB externe.

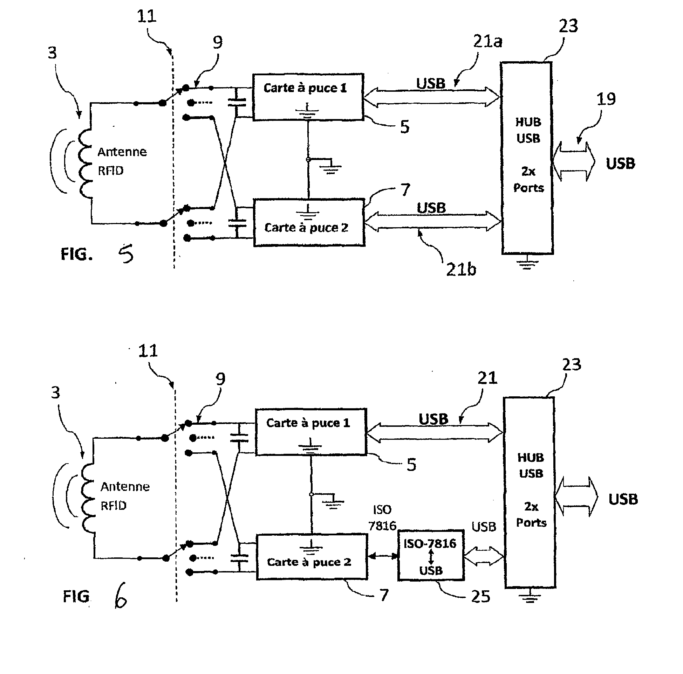

En variante supplémentaire représentée dans la figure 5, chacune des cartes à puce 5,7 comporte une interface de type USB qui est alors connectée à un connecteur USB externe par l'intermédiaire d'un concentrateur de ports USB 23.

On peut également imaginer une variante supplémentaire, représentée en figure 6, dans laquelle l'une des cartes à puce comporte une interface de type USB, et l'autre carte à puce comporte une interface de type ISO 7816, cette dernière étant alors connectée à un convertisseur de format 25 ISO 7816 vers USB.

L'homme du métier sera à même de choisir la meilleure forme d'implémentation du moyen de commutation 9 en fonction de l'application visée, mais il peut être avantageux que ce moyen de commutation soit constitué par un bouton poussoir actionné par l'utilisateur du dispositif. Comme le bouton poussoir est connecté mécaniquement à un interrupteur qu'il actionne, et cet interrupteur étant connecté entre l'antenne et les ports de communication sans fil des cartes à puce, l'actionnement du bouton poussoir entraîne la connexion alternativement de l'antenne et d'une carte à puce donnée, tandis que l'autre carte à puce n'est pas alimentée pendant ce temps et ne fonctionne pas.

### Avantages du dispositif selon l'invention

L'invention répond aux objectifs fixés. En particulier, elle permet de proposer un nouveau dispositif communiquant, notamment de type clé USB dotée de plusieurs puces de cartes à puce sans contact. L'invention amène la possibilité de partager une même antenne alternativement en fonction avec l'une des cartes à puce sans contact. Chaque carte à puce sans contact étant associée à une application donnée, par exemple une application de paiement de titres de transport, une application d'accès physique, une application d'accès logique, une application de paiement sans contact, et chaque application étant éventuellement mise en place et gérée par un opérateur différent.

Ceci permet de loger des applications multiples mais indépendantes dans un même objet portable, par exemple au format d'une clé USB, tout en ayant un encombrement et un coût de fabrication minimal.

Lorsque le bouton poussoir possède un point milieu, il est possible d'obtenir une sécurité de fonctionnement supplémentaire puisqu'il est alors possible de désactiver le fonctionnement de l'interface de communication, et donc de bloquer le fonctionnement des applications embarquées.

Il est également possible d'activer par défaut une puce, par exemple la puce hébergeant une application de type transport, et de n'activer l'autre puce, par exemple une puce hébergeant une application de type paiement, uniquement à la demande de façon ponctuelle, par action de l'utilisateur sur le bouton de sélection.

De façon similaire, il est possible de prévoir d'avoir une puce fixée à demeure sur le dispositif, et une autre puce placée dans une carte à puce amovible et interchangeable, comme par exemple une carte à puce de type carte SIM.

## Revendications

1. Dispositif (1) électronique portable et communiquant, comportant un boîtier abritant une carte de circuit imprimé à laquelle sont connectées au moins deux cartes à puce (5,7), chaque carte à puce étant pourvue d'une interface de communication sans contact, ledit dispositif comportant en outre une antenne (3) destinée à être connectée à l'interface de communication sans contact de chaque carte à puce, de façon à assurer la communication sans contact entre ladite carte à puce et un lecteur de carte à puce externe, **caractérisé en ce qu'**il comporte en outre un moyen de commutation (9) connecté entre les bornes des interfaces de communication sans contact desdites cartes à puce et les bornes de ladite antenne (3), ce moyen de commutation (9) étant apte à connecter sélectivement l'antenne du dispositif avec une carte à puce (5,7) sans contact donnée, par actionnement dudit moyen de commutation (9).

2. Dispositif électronique selon la revendication 1, **caractérisé en ce que** ledit moyen de commutation (9) est un interrupteur à au moins deux positions, chaque position de l'interrupteur correspondant à la connexion d'une carte à puce (5,7) donnée avec ladite antenne (3).

3. Dispositif électronique selon la revendication 2, **caractérisé en ce que** ledit interrupteur (9) comporte en outre un point milieu (13) connecté à aucune carte à puce, de façon à empêcher toute communication entre l'une des cartes à puce et ladite antenne, lorsque l'interrupteur est positionné sur le point milieu.

4. Dispositif électronique selon l'une des revendications 1 à 3, **caractérisé en ce qu'**il comporte une antenne unique (3) connectée audit moyen de commutation, et une pluralité de cartes à puce dont les interfaces de communication sans contact peuvent sélectivement être connectées à ladite antenne (3) par l'intermédiaire dudit moyen de commutation (9).

5. Dispositif électronique selon l'une quelconque des revendications précédentes, **caractérisé en ce que** ledit boîtier est au format d'une clé USB et **en ce qu'**il comporte une interface de communication de type USB pour connecter le dispositif à un système hôte.

6. Dispositif électronique selon la revendication 5, **caractérisé en ce qu'**il comporte un microcontrôleur (17) pour gérer la communication entre lesdites cartes à puce (5,7) et l'interface USB.

7. Dispositif électronique selon la revendication 5, **caractérisé en ce qu'**au moins l'une des cartes à puce comporte une interface de type USB, de façon à permettre une liaison entre ladite carte à puce et un connecteur USB externe.

8. Dispositif électronique selon la revendication 7, **caractérisé en ce qu'**au moins l'une des cartes à puce (5,7) comporte une interface de type USB, **en ce qu'**au moins une autre carte à puce comporte une interface de type ISO 7816, et **en ce que** chaque carte à puce est connectée à un concentrateur USB soit directement via l'interface USB de la carte, soit à travers un convertisseur de protocole de communication ISO 7816 vers le protocole de communication USB.

9. Dispositif électronique selon l'une quelconque des revendications précédentes, **caractérisé en ce que** ledit moyen de commutation est constitué par un bouton poussoir actionné par l'utilisateur du dispositif, ledit bouton poussoir étant connecté à un interrupteur connecté entre ladite antenne et les ports de communication sans fil des cartes à puce, de manière à pouvoir connecter alternativement l'antenne et une carte à puce donnée.

## Patentansprüche

1. Tragbare und kommunizierende elektronische Vorrichtung (1), die ein Gehäuse aufweist, das eine Leiterplatte aufnimmt, mit der mindestens zwei Chipkarten (5, 7) verbunden sind, wobei jede Chipkarte mit einer kontaktlosen Kommunikationsschnittstelle versehen ist, wobei die Vorrichtung außerdem eine Antenne (3) aufweist, die dazu bestimmt ist, mit der kontaktlosen Kommunikationsschnittstelle jeder Chipkarte verbunden zu werden, um die kontaktlose Kommunikation zwischen der Chipkarte und einem externen Chipkartenleser zu gewährleisten, **dadurch gekennzeichnet, dass** sie außerdem eine Schalteinrichtung (9) aufweist, die zwischen den Klemmen der kontaktlosen Kommunikationsschnittstellen der Chipkarten und den Klemmen der Antenne (3) verbunden ist, wobei diese Schalteinrichtung (9) die Antenne der Vorrichtung durch Betätigung der Schalteinrichtung (9) selektiv mit einer Chipkarte (5, 7) ohne gegebenen Kontakt verbinden kann.

2. Elektronische Vorrichtung nach Anspruch 1, **dadurch gekennzeichnet, dass** die Schalteinrichtung (9) ein Schalter mit mindestens zwei Stellungen ist, wobei jede Stellung des Schalters der Verbindung einer gegebenen Chipkarte (5, 7) mit der Antenne (3) entspricht.

3. Elektronische Vorrichtung nach Anspruch 2, **dadurch gekennzeichnet, dass** der Schalter (9) außerdem eine Mittenstellung (13) aufweist, die mit keiner Chipkarte verbunden ist, um jede Kommunikation zwischen einer der Chipkarten und der Antenne zu verhindern, wenn der Schalter in der Mittenstellung positioniert ist.

4. Elektronische Vorrichtung nach einem der Ansprüche 1 bis 3, **dadurch gekennzeichnet, dass** sie eine einzige Antenne (3), die mit der Schalteinrichtung verbunden ist, und eine Vielzahl von Chipkarten aufweist, deren kontaktlose Kommunikationsschnittstellen mittels der Schalteinrichtung (9) selektiv mit der Antenne (3) verbunden werden können.

5. Elektronische Vorrichtung nach einem der vorhergehenden Ansprüche, **dadurch gekennzeichnet, dass** das Gehäuse das Format eines USB-Sticks hat, und dass es eine USB-Kommunikationsschnittstelle aufweist, um die Vorrichtung mit einem Host-System zu verbinden.

6. Elektronische Vorrichtung nach Anspruch 5, **dadurch gekennzeichnet, dass** sie einen Mikrocontroller (17) aufweist, um die Kommunikation zwischen den Chipkarten (5,7) und der USB-Schnittstelle zu verwalten.

7. Elektronische Vorrichtung nach Anspruch 5, **dadurch gekennzeichnet, dass** mindestens eine der Chipkarten eine USB-Schnittstelle aufweist, um eine Verbindung zwischen der Chipkarte und einem externen USB-Verbinder zu erlauben.

8. Elektronische Vorrichtung nach Anspruch 7, **dadurch gekennzeichnet, dass** mindestens eine der Chipkarten (5, 7) eine USB-Schnittstelle aufweist, dass mindestens eine andere Chipkarte eine Schnittstelle der Art ISO 7816 aufweist, und dass jede Chipkarte mit einem USB-Konzentrator verbunden ist, entweder direkt über die USB-Schnittstelle der Karte oder über einen Konverter des Kommunikationsprotokolls ISO 7816 zum USB-Kommunikationsprotokoll.

9. Elektronische Vorrichtung nach einem der vorhergehenden Ansprüche, **dadurch gekennzeichnet, dass** die Schalteinrichtung aus einer Drucktaste besteht, die vom Benutzer der Vorrichtung betätigt wird, wobei die Drucktaste mit einem Schalter verbunden ist, der zwischen der Antenne und den drahtlosen Kommunikationsanschlüssen der Chipkarten verbunden ist, um alternativ die Antenne und eine gegebene Chipkarte verbinden zu können.

## Claims

1. Portable and communicating electronic device (1), comprising a casing sheltering a printed circuit card to which are connected at least two chip cards (5, 7), each chip card being provided with a contactless communication interface, the said device furthermore comprising an antenna (3) intended to be connected to the contactless communication interface of each chip card, so as to ensure contactless communication between the said chip card and an external chip card reader, **characterized in that** it furthermore comprises a switching means (9) connected between the terminals of the contactless communication interfaces of the said chip cards and the terminals of the said antenna (3), this switching means (9) being able to selectively connect the antenna of the device with a given contactless chip card (5, 7), by actuation of the said switching means (9).

2. Electronic device according to Claim 1, **characterized in that** the said switching means (9) is a breaker with at least two positions, each position of the breaker corresponding to the connection of a given chip card (5, 7) with the said antenna (3).

3. Electronic device according to Claim 2, **characterized in that** the said breaker (9) furthermore comprises a midpoint (13) connected to no chip card, so as to prevent any communication between one of the chip cards and the said antenna, when the breaker is positioned on the midpoint.

4. Electronic device according to one of Claims 1 to 3, **characterized in that** it comprises a single antenna (3) connected to the said switching means, and a plurality of chip cards whose contactless communication interfaces can selectively be connected to the said antenna (3) by way of the said switching means (9).

5. Electronic device according to any one of the preceding claims, **characterized in that** the said casing is in the format of a USB key and **in that** it comprises a communication interface of USB type to connect the device to a host system.

6. Electronic device according to Claim 5, **characterized in that** it comprises a microcontroller (17) to manage the communication between the said chip cards (5, 7) and the USB interface.

7. Electronic device according to Claim 5, **characterized in that** at least one of the chip cards comprises an interface of USB type, so as to allow a link between the said chip card and an external USB connector.

8. Electronic device according to Claim 7, **characterized in that** at least one of the chip cards (5, 7) comprises an interface of USB type, **in that** at least one other chip card comprises an interface of ISO 7816 type, and **in that** each chip card is connected to a USB concentrator either directly via the USB interface of the card, or through a converter from ISO 7816 communication protocol to the USB communication protocol.

9. Electronic device according to any one of the preceding claims, **characterized in that** the said switching means consists of a push-button actuated by the user of the device, the said push-button being connected to a breaker connected between the said antenna and the wireless communication ports of the chip cards, so as to be able to alternatively connect the antenna and a given chip card.
